# EUROPEAN PATENT APPLICATION

(11) **EP 1 832 212 A2**
(43) Date of publication of application: **12.09.2007**
(21) Application number: 07004653.7
(22) Date of filing: 07.03.2007
(51) Int. Cl.: A47J 45/06

(54) **Frying pan**

(30) Priority: 10.03.2006 ES 200600568 U
(71) Applicant: Rayen S.L., 08850 Gava (Barcelona) (ES)
(72) Inventor: Lindhorst, Ivo Casajuana, (ES)
(74) Representative: PROPI, S.L.

(57) **Abstract**

The frying pan consists of a body (1), at the periphery whereof and close to its mouth, a support (2) is fixed, with the collaboration of a screw or rivet (3), with said support (2) substantially extending above the mouth of the body (1) to end in a ring (6) with a formal interior section dimensionally coinciding with that of the handle (7) of the frying pan, although related to it through said support (2). The handle(7) incorporates in what should be its internal end a rim (8) functioning as a stop to limit the displacement of said handle (7) outwards, and relatively close to it, separated by a distance in consonance with the axial level of the ring (6), incorporating a button (9) having a front stepping (12) in its upper or external face able to closely adapt to the exterior area of the ring (6). The handle (7) becomes unblocked and can axially displace towards the body (1) of the frying pan, adopting a position in which it practically does not jut out of the body, causing minimum inconvenience.

## Description

### OBJECT OF THE INVENTION

The present invention relates to a frying pan, which as such incorporates a container body from which a handle radially emerges from the proximity of its mouth, for its handling.

The object of the invention is to achieve a frying pan in which said handle interferes as little as possible in the storage of the frying pan when unused.

### BACKGROUND OF THE INVENTION

As just mentioned, a conventional frying pan is structured in terms of a body in the form of a relatively flat pot, with varying diameters according to the envisaged capacity for each frying pan, to which is fixed laterally, generally through screwing or welding, a handle that emerges radially and that, conveniently sheathed in plastic or wood, allows the frying pan to be handled comfortably, without risk of burning the hands.

Usually, it is necessary to have a set of frying pans, of different sizes, so as to use the most appropriate one in each case according to the amount and type of food to be cooked.

Said handle, which sometimes has a length that is greater than that of the frying pan body's radius, constitutes an obstacle that makes the frying pan's storage considerably difficult, because it occupies a substantially greater amount of space than would be desirable.

In an attempt to overcome this problem there are frying pans with handles that can be removed from the body of the frying pan, bushing this solution has two-sided disadvantages, on the one hand the fixing of the handle to the frying pan is not as solid as would be wanted, and on the other hand, it causes dispersion of the parts to be stored physically independently of each other, often creating difficulties when it comes to finding the appropriate handle for the selected frying pan.

### DESCRIPTION OF THE INVENTION

The frying pan proposed by the invention, resolving the storage problem referred to above, also resolves the inherent problems to frying pans with removable handles, constituting a simple, safe and efficient solution.

To this end and in a more specific manner, said frying pan incorporates, conveniently fixed to its body at a point of its periphery, a support with a base that adapts to the body of the frying pan and an orifice for fixing by screwing said body, with said support extending at its upper part into a ring with a markedly horizontal axis, suitably sized to allow the sliding through it of a handle with a constant section and appropriate length, in such a way that said handle is able to adopt two extreme positions, one in which it emerges totally outside the body of the frying pan, corresponding to the frying pan's situation of use, and another in which it projects radially inside the frying pan, jutting outwards to a minimum extent, making it ideal for the frying pan's storage.

In this regard, it is contemplated that the ring is sufficiently enhanced in relation to the body of the frying pan, so as to allow the stacking of various frying pans of different sizes that form part of a set of frying pans.

In order to conveniently retain the handle in its working position, the latter incorporates, at what should be its internal end, a perimeter rim to act as a stop on the internal mouth of said ring belonging to the support, at the same time as, distanced from said rim in correspondence with the ring's axial level, it incorporates a button, retractable against the tension of one or more springs and with a stepping on its internal end functioning as a bushing on the external mouth of the support ring, in such a way that in the frying pan's situation of use the handle is blocked to the support of its body between the rim of said handle and said button, with a perfect adjustment that fully immobilizes the handle in relation to the body of the frying pan, whereas in the inoperative position it is sufficient to press said button for it to withdraw inside the handle, and said handle can slide over the ring, to a limit situation in turn delimited by a stopper that closes the rear end of the handle, which is unmovable in relation to the latter bushing can be dismantled, bushing ending in another rim such as the one of the internal end, designed also to act as a bushing on the support ring.

### DESCRIPTION OF THE DRAWINGS

To complement the description and with a view to contributing to a better understanding of the invention's characteristics, according to a preferred practical embodiment of the invention, a set of drawings is included as an integral part of said description, which by way of illustration bushing not limitation show the following:
- Figure 1.-: Shows a perspective view of a frying pan realized according to the object of the present invention.
- Figure 2.-: Shows a side elevation view of the same frying pan, in the same working position as that of figure 1.
- Figure 3.-: Shows a profile similar to that of figure 2 bushing in which the frying pan is in an operative position.
- Figure 4.-: Shows an exploded perspective view of the frying pan's handle and the means of fixing the handle to the body.
- Figure 5.-: Finally, shows an example of the stacking of three frying pans of different sizes, all of them realized according to the invention, also in a perspective view.

### PREFERRED EMBODIMENT OF THE INVENTION

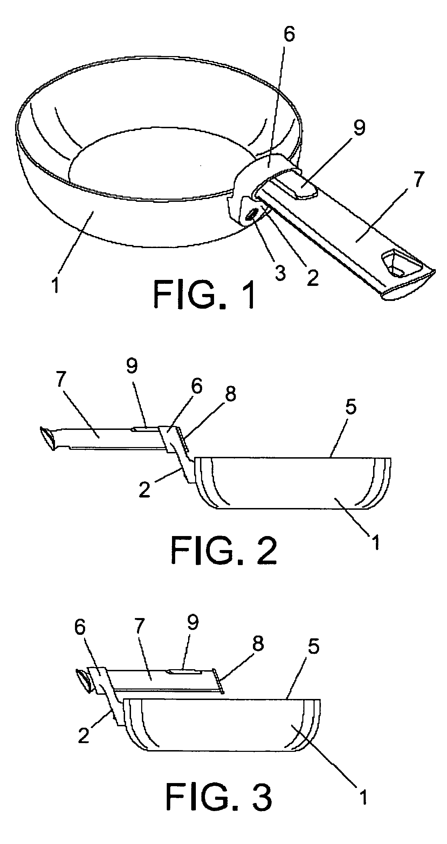

From the abovementioned figures it is possible to observe how the frying pan contemplated by the invention consists of a body (1), which may adopt the configuration of any conventional frying pan, a body (1) at the periphery whereof and close to its mouth, a support (2) is fixed, with the collaboration of a screw or rivet (3) passing through an orifice (4), with said support (2) being made of a fire-resistant material and substantially extending above the mouth (5) of the body (1), as can be especially seen in figures 2 and 3, to end in a ring (6) with a formal interior section dimensionally coinciding with that of the handle (7) of the frying pan, physically independent of the body of the frying pan, although related to it through said support (2).

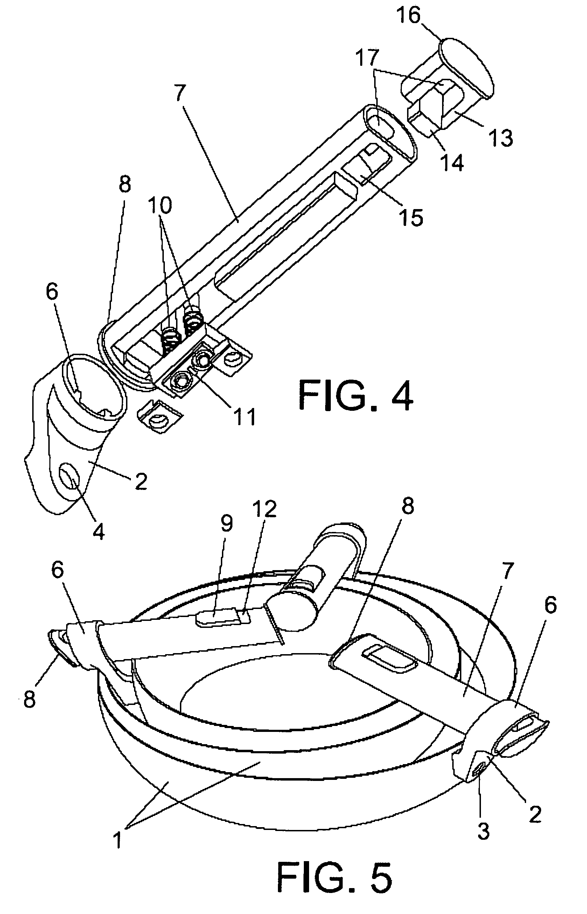

The handle (7) incorporates in what should be its internal end a rim (8) functioning as a stop to limit the displacement of said handle (7) outwards, and relatively close to it, separated by a distance in consonance with the axial level of the ring (6), incorporating a button (9), retractable against the tension of springs (10) housed inside the hollow of the handle (7) and which can be accessed through a lid (11) fixable through screwing or any other means, with said button (9) having a front stepping (12) in its upper or external face able to closely adapt to the exterior area of the ring (6), as can be especially observed in figures 1 and 2, in such a way that in this position the handle (7) is left in a working condition, solidly and immovably joined to the body (5) of the frying pan, whereas when the button (9) is pressed downwards, it liberates the blocking between the ring (6) and the handle (7), meaning that the handle (7) can displace inwards, until the limit situation shown in figure (3), in which the frying pan's storage is considerably facilitated, as can be seen in turn from observing figure 5, a limit situation that in turn is determined by a stopper (13) that plugs into the external end of the handle (7), blocking into it through a radial expansion (14) couplable with an orifice (15) of the handle, and having a rim (16) on its external end, equivalent to the rim (8) of the handle's internal end, which is the one that acts as a stop on the external mouth of the ring (6) preventing the handle's full uncoupling, which at the same time and as is standard has an orifice (17) that affects both the handle (7) and the stopper (13) allowing the frying pan to be hung when so desired.

## Claims

1. Frying pan, of the type consisting of a body at the periphery whereof, near its mouth, a handle is coupled that emerges radially from said body with a length appropriate for the frying pan's easy handling, **characterized in that** said handle (7) is immovably mounted on the body (1), specifically with the capacity for axial displacement in the core of a bushing (7), with a view to adopting two positions, one working position in which the handle (7) is situated outside the body (1) of the frying pan, and another inoperative position in which the handle (7) is positioned radially inside the frying pan's body (1).

2. Frying pan, according to claim 1, **characterized in that** said ring (6) forms part of a support (2), fitted with an orifice (4) for its fixing by screwing, riveting or other means to the body (1) of the frying pan, in such a way that said ring (6) is left substantially projected upwards in relation to the mouth of the body (1).

3. Frying pan, according to preceding claims, **characterized in that** the ring (6) presents a formal internal section dimensionally coinciding with that of the handle (7), in turn of a constant section bushing fitted with two external rims, one rim (8) on its internal end designed to act as a stop on the ring (6), and another rim (16) on its external end, designed to prevent the full uncoupling of the handle (7) in relation to the ring (6) associated to the body (1), with it being contemplated that in the proximity of the internal rim (8) a button (9) is placed, retractable against springs (10), emerging from the handle (7) constituting an axially retaining stopper for the handle in relation to the ring (6), leaving said button (9) at a distance from the rim (8) in a size that coincides with the axial level of the bushing (6).

4. Frying pan, according to preceding claims, **characterized in that** the rim (16) of the external end of the handle (7) has a lid (13) that can be dismantled, which allows the handle to be inserted through the ring (6) and that is fixed in a tongue and groove manner to the handle in an immovable fashion.
